# FASCICULE DE BREVET EUROPEEN

(11) **EP 1 573 413 B1**
(45) Date de publication et mention de la délivrance du brevet: **26.04.2006**
(21) Numéro de dépôt: 03799579.2
(22) Date de dépôt: 17.12.2003
(51) Int. Cl.: G05D 23/24

(54) **DISPOSITIF DE REGULATION DE LA TEMPERATURE D UN FIL CHAUFFANT A FAIBLES PERTURBATIONS EMISES**
VORRICHTUNG ZUR REGELUNG DER TEMPERATUR EINES HEIZDRAHTS MIT NIEDRIGEN AUSGESTRAHLTEN STÖRUNGEN
DEVICE FOR REGULATING THE TEMPERATURE OF A HEATING WIRE WITH FEW EMITTED DISTURBANCES

(30) Priorité: 20.12.2002 FR 0216364
(43) Date de publication de la demande: 14.09.2005
(73) Titulaire: Thales, 92526 Neuilly Sur Seine (FR)
(72) Inventeur: CHOISNET, Joël, c/oTHALES Intellectual Property, F-94117 Arcueil (FR)
(74) Mandataire: Collet, Alain
(86) Numéro de dépôt international: PCT/EP2003/051036
(87) Numéro de publication internationale: WO 2004/057433

(56) Documents cités:
- FR-A- 2 393 363
- FR-A- 2 726 148
- US-A- 1 400 623
- US-A- 4 130 853

## Description

L'invention se rapporte à un dispositif de régulation de la température d'un fil chauffant alimenté par une tension continue. L'invention trouve une utilité particulière mais non exclusive dans le dégivrage de sondes aérodynamiques utilisées en aéronautique. Le dégivrage des sondes est nécessaire lors de phases de vol en haute altitude pendant lesquelles la température ambiante est bien inférieure à 0°C. Le dégivrage est habituellement réalisé au moyen d'un fil chauffant disposé dans le corps de la sonde. En faisant circuler un courant électrique dans le fil, on réchauffe la sonde, empêchant ainsi la formation de givre sur la sonde, givre susceptible de modifier la forme de la sonde et par conséquent ses caractéristiques aérodynamiques.

Il est connu des brevets français FR 2 726 148 et FR 2 393 363 de réguler la température d'une sonde au moyen d'un fil chauffant dont la résistance varie en fonction de sa température. Cette variation de résistance permet de mesurer la température du fil chauffant. La mesure de température permet de couper périodiquement l'alimentation électrique du fil chauffant. Le rapport cyclique entre la durée pendant laquelle l'alimentation du fil est présente et la durée totale d'une période permet de réguler la température du fil chauffant. Pour ouvrir ou fermer l'alimentation du fil on peut utiliser un transistor de puissance. Lorsque pour alimenter le fil chauffant, on utilise un réseau alternatif, par exemple 115 VAC - 400 Hz, on peut synchroniser les commutations du transistor sur les instants de passage à zéro de la tension d'alimentation du réseau. Les perturbations émises par conduction sur le réseau sont alors limitées car la tension aux bornes du transistor est faible lors de sa commutation. En revanche, lorsqu'on utilise un réseau continu, par exemple 28 VDC, il n'y a pas de passage à zéro de la tension d'alimentation et le transistor commute des courants importants. Par exemple pour une sonde nécessitant une puissance de réchauffage de l'ordre de 400 à 500W, on commutera des courants d'environ 15 à 20 A en un temps très court. Le temps de commutation d'un transistor de puissance utilisé comme interrupteur électronique est typiquement très inférieur à 1 µs. Un temps de commutation faible est avantageux du point de vue de la dissipation de puissance dans le transistor, en effet plus le temps de commutation est faible, plus la puissance dissipée lors de la commutation est faible.

Les variations rapides de consommation de courant sur le réseau provoquent des perturbations émises qui sont d'autant plus difficiles à filtrer que les puissances mises en jeu sont importantes.

L'invention a pour objet de proposer une solution au problème des perturbations émises en évitant les commutations trop rapides dans l'interrupteur électronique.

A cet effet l'invention a pour objet de maîtriser le temps de commutation de l'interrupteur électronique indépendamment de ses caractéristiques propres. En d'autres termes, l'invention a pour objet un dispositif de régulation de la température d'un fil chauffant, le dispositif comportant un interrupteur électronique raccordé en série avec le fil chauffant, des moyens de commande de l'interrupteur électronique caractérisé en ce que le dispositif comporte en outre des moyens de maîtrise d'un temps de commutation de l'interrupteur électronique.

L'invention a pour conséquence d'augmenter le temps de commutation de l'interrupteur ce qui tend à augmenter la puissance dissipée lors de la commutation de l'interrupteur. On pourra néanmoins conserver la puissance dissipée dans des limites raisonnables au regard du temps de cycle avec lequel l'interrupteur fonctionne.

L'invention sera mieux comprise et d'autres avantages apparaîtront à la lecture de la description détaillée d'un mode de réalisation donné à titre d'exemple, description illustrée par le dessin joint dans lequel :
- la figure 1 représente un schéma de principe d'un dispositif conforme à l'invention ;
- les figures 2a et 2b représentent sous forme de chronogramme, la commande de l'interrupteur électronique placé en série avec le fil chauffant ;
- la figure 3 représente un schéma détaillé du mode de réalisation préféré de l'invention.

Pour améliorer la compréhension de la description, les mêmes éléments porteront les mêmes repères topologiques dans les différentes figures.

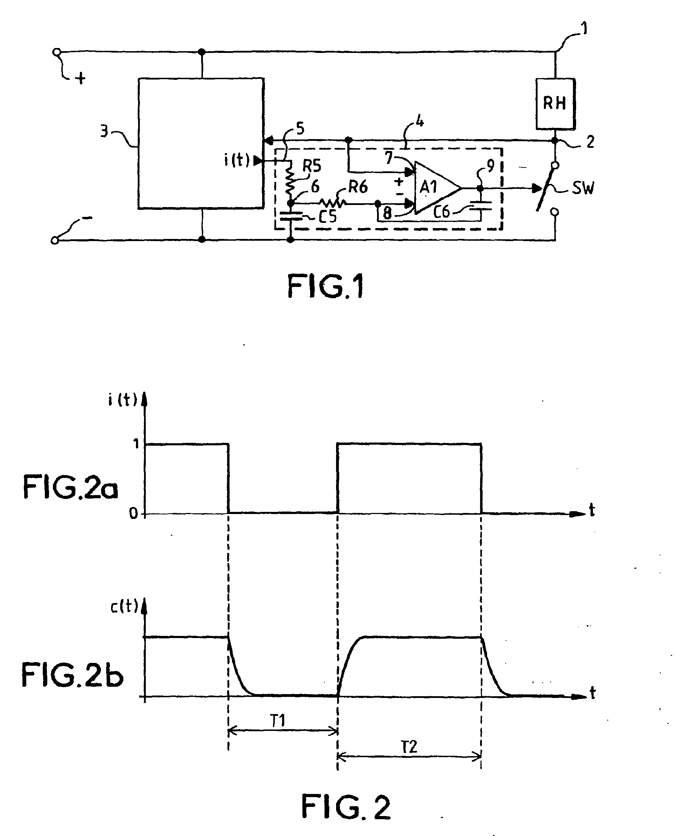

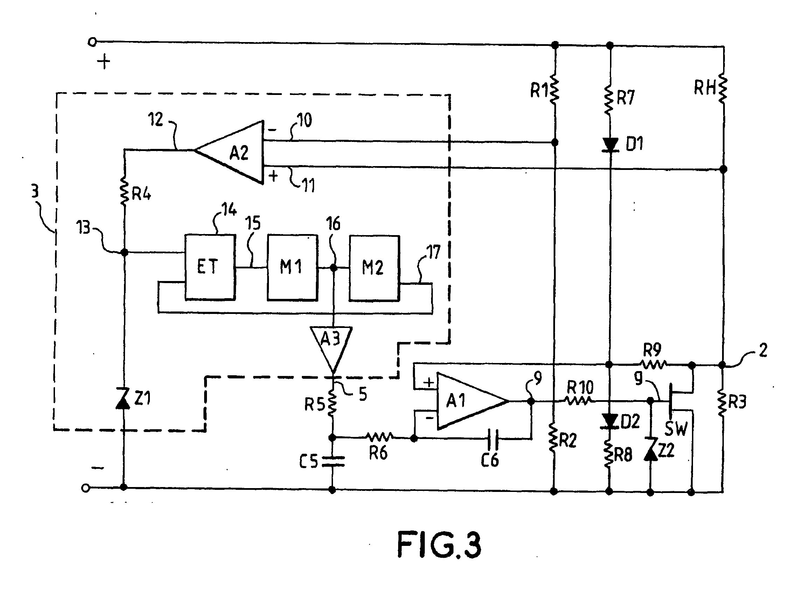

Le dispositif représenté sur la figure 1 comporte un fil chauffant RH raccordé en série avec un interrupteur électronique SW. L'ensemble formé par le fil chauffant RH et l'interrupteur électronique SW est alimenté par une source de tension continue dont le pôle positif est noté + et dont le pôle négatif est noté -. Le fil chauffant RH est réalisé dans un matériau présentant un coefficient de température non négligeable par exemple positif. Lorsque l'interrupteur SW est fermé, un courant circule dans le fil chauffant RH et il est possible de mesurer la température du fil chauffant RH en mesurant la tension présente entre ses bornes 1 et 2. La borne 1 est reliée au pôle positif + et la borne 2 est reliée à l'interrupteur SW. Le dispositif comporte également des moyens de mesure de la température du fil chauffant RH et des moyens de commande de l'interrupteur SW, tous deux représentés au cadre 3 pour ne pas alourdir le schéma de principe. Un exemple de réalisation sera décrit à l'aide de la figure 3. Le cadre 3 est raccordé à la borne 2 du fil chauffant RH et au pôle positif + afin de déterminer la température du fil chauffant RH. Le cadre 3 produit une information i variable en fonction du temps et notée i (t). L'opposée de l'information i (t) permet la commande directe de l'interrupteur SW lorsqu'on ne se soucie pas des perturbations émises vers la source de tension continue.

L'information i(t), dont un chronogramme est représenté figure 2a, ne peut prendre que deux valeurs distinctes 0 et 1. 0 représente la valeur de i(t) pour laquelle l'interrupteur SW est fermé et 1 représente la valeur de i(t) pour laquelle SW est ouvert. 1(t) prend la valeur 0 pendant une durée T1 et la valeur 1 pendant une durée T2. La durée T1 + T2 représente un cycle de fonctionnement. Le rapport T1/(T1+T2) forme un rapport cyclique qui est modifié par les moyens de commande de l'interrupteur SW présent au cadre 3 en fonction d'un éventuel écart entre la température du fil chauffant RH et une consigne.

Selon l'invention, le dispositif comporte en outre des moyens 4 de maîtrise d'un temps de commutation de l'interrupteur électronique SW. Les moyens 4 comportent une résistance R5 raccordée au pôle négatif - de la source de tension continue par l'intermédiaire d'un condensateur C5. Une borne 5 de la résistance R5, borne non raccordée au condensateur C5, reçoit l'information i(t). Au point commun 6 de la résistance R5 et du condensateur C5 apparaît une tension de consigne c(t) représentée sur la figure 2b. Lorsqu'un front descendant apparaît sur l'information i(t), la tension de consigne c(t) suit ce front avec une décroissance plus lente que celle du front. La vitesse de décroissance est définie par les valeurs de la résistance R5 et du condensateur C5. Cette vitesse détermine le temps de commutation de l'interrupteur électronique SW. Il en est de même lorsqu'un front montant apparaît sur l'information i(t) et la tension de consigne c(t) suit ce front avec une croissance plus lente que celle du front.

La résistance R5 et le condensateur C5 forment un filtre du premier ordre. Il est bien entendu possible de choisir d'autres types de composants pour réaliser un filtre du premier ou même de réaliser un filtre d'ordre supérieur afin d'adapter l'évolution de la tension de consigne c(t) au besoin.

Le temps de commutation, défini par les valeurs de la résistance R5 et du condensateur C5, est supérieur à la durée normale de commutation de l'interrupteur électronique puis isolément. Plus précisément lorsqu'on utilise, par exemple, un transistor à effet de champ comme interrupteur électronique SW, le temps de commutation d'un tel transistor pris isolément est de l'ordre de la centaine de nanoseconde. Pour réduire les perturbations émises on peut augmenter le temps de commutation a une valeur par exemple de l'ordre de la milliseconde. En augmentant le temps de commutation on augmente également la puissance dissipée par l'interrupteur SW lors de la commutation. On peut admettre cette augmentation si le temps de cycle T1 + T2 reste très supérieur au temps de commutation. Ainsi l'interrupteur électronique pourra dissiper la puissance générée lors de la commutation, pendant les durées T1 ou T2 et après les commutations correspondantes.

Avantageusement les moyens de maîtrise 4 asservissent la tension aux bornes de l'interrupteur SW en fonction de la tension de consigne c(t). Plus précisément, toujours dans l'exemple d'un transistor à effet de champ utilisé comme interrupteur électronique SW, on a constaté que l'asservissement de la tension de grille ne permettait pas de maîtriser avec une grande précision la puissance dissipée par le transistor. Il est préférable d'asservir la tension entre la source et le drain du transistor, ce qui permet de maîtriser le courant traversant le transistor et donc la puissance qui y est dissipée. Pour réaliser cet asservissement, les moyens de maîtrise 4 comportent par exemple un amplificateur opérationnel A1 dont une première entrée, l'entrée non inverseuse 7, est raccordée au point commun 2 du fil chauffant RH et de l'interrupteur électronique SW et dont une deuxième entrée, l'entrée inverseuse 8, et reçoit la tension de consigne c(t). L'amplificateur opérationnel A1 comporte également une sortie 9 qui commande l'ouverture ou la fermeture de l'interrupteur électronique SW. L'amplificateur opérationnel A1 compare la tension présente au point commun 2 avec la consigne c(t). L'amptificateur opérationnel A1 commande l'interrupteur SW de façon à ce que la tension présente au point commun 2, reste en permanence et notamment lors des commutations, égale à la consigne c(t). On peut prévoir une résistance R6 raccordée entre la borne 6 et l'entrée inverseuse 8 ainsi qu'un condensateur C6 raccordé entre l'entrée inverseuse 8 et la sortie 9 de l'amplificateur opérationnel A1. Le condensateur C6 et la résistance R6 assurent la stabilité de l'asservissement. Leurs valeurs permettent de déterminer une constante de temps qui est par exemple de l'ordre de la microseconde.

La figure 3 représente un schéma détaillé d'un mode de réalisation d'un dispositif de régulation de température dont le schéma de principe a été décrit à l'aide de la figure 1.

Au cadre 3, un comparateur A2 permet de comparer la température du fil chauffant RH à une température de consigne. Plus précisément, une entrée inverseuse 10 du comparateur A2 est reliée au point commun de deux résistances R1 et R2 raccordées en série entre le pôle positif + et le pôle négatif - de la source de tension continue. Une entrée non inverseuse 11 du comparateur A2 est reliée au point commun du fil chauffant RH et d'une résistance R3 reliée en parallèle de l'interrupteur électronique SW. Le fil chauffant RH et la résistance R3 sont raccordés en série entre le pôle positif + et le pôle négatif -. Le fil chauffant RH et les trois résistances R1, R2 et R3 forment un pont de Wheatstone dont le déséquilibre est détecté par le comparateur A2. Le point commun des résistances R1 et R2 forme une tension de référence représentant la température de consigne. En choisissant un fil chauffant RH dont la résistance varie en fonction de la température, il est possible de déterminer au moyen du comparateur A2 si la température du fil chauffant est supérieure ou inférieure à la température de consigne. L'opération de mesure de la température du fil chauffant RH est réalisée lorsque l'interrupteur SW est ouvert. La valeur de la résistance R3 est choisie de telle façon que, lorsque l'interrupteur électronique SW est ouvert, seul un faible courant circule dans le fil chauffant RH et dans la résistance R3. Par exemple, la valeur de la résistance R3 est cinq cent fois plus élevée que la valeur moyenne de la résistance du fil chauffant RH.

La résistance du fil chauffant RH présente par exemple un coefficient de température positif. On choisit les valeurs des résistances R1 et R2 pour que, lorsque le pont de Wheatstone est à l'équilibre, la température du fil chauffant RH soit égale à la température de consigne. Dans le cas où le coefficient de température du fil chauffant RH est positif, si la température du fil chauffant RH est supérieure à la température de consigne, une tension présente sur une sortie 12 du comparateur A2 est proche de la tension du pôle négatif -. En revanche, si la température du fit chauffant RH est inférieure à la température de consigne, la tension présente sur la sortie 12 est alors proche de la tension du pôle positif +. La tension présente sur la sortie 12 peut être adaptée au moyen d'une résistance R4 et d'une diode zéner Z1 raccordées toutes deux en série entre la sortie 12 et le pôle négatif. L'anode de la diode zéner Z1 est directement raccordée au pôle négatif -. En un point 13, la cathode de la diode zéner Z2 est raccordée à la résistance R4. Le point 13 forme, par ailleurs, une entrée d'une cellule ET 14 dont une sortie 15 forme une entrée d'un circuit monostable M1. Une sortie 17 du circuit monostable M1 forme l'entrée d'un circuit monostable M2. Une sortie 16 du circuit monostable M2 forme une seconde entrée de la cellule ET 14. Le signal i(t) est présent sur la sortie 16 du circuit monostable M1.

Lorsque l'interrupteur électronique SW est ouvert et que la température du fil chauffant RH devient inférieure à la température de consigne, la tension de la sortie 12 du comparateur A2 s'élève et le circuit monostable M1 délivre sur la sortie 16 une impulsion de valeur 0 pour le signal i(t) d'une durée fixe T1, par exemple de l'ordre de 500 ms, lors de l'apparition d'un front montant sur la sortie 15 de la cellule ET 14. Comme on l'a vu précédemment, au moyen de la figure 1, pendant l'impulsion de valeur 0 pour le signal i(t), l'interrupteur SW est rendu conducteur et le fil chauffant RH est alimenté par un fort courant permettant son réchauffage: A la fin de l'impulsion de valeur 0 pour le signal i(t), le circuit monostable M2 délivre sur la sortie 17 une impulsion négative d'une durée minimum T2, par exemple de l'ordre de 5 ms rendant l'interrupteur SW ouvert et permettant la mesure de température du fil chauffant RH. Tant que la température du fil chauffant RH reste supérieure à la température de consigne, la tension présente sur la sortie 12 du comparateur A2 reste à son niveau le plus bas et l'impulsion négative se prolonge. En revanche, lorsque la température du fil chauffant RH devient inférieure à la température de consigne, la cellule ET 14 permet l'apparition d'une nouvelle impulsion positive. En résumé, le réchauffage du fil chauffant RH est effectif lors d'impulsion d'une durée fixe T1 et chaque impulsion d'une durée T1 est suivie d'une durée T au minimum égale à T2 pendant laquelle le réchauffage est interrompu. La durée T1 est constante et est fixée par le circuit monostable M1, tandis que la durée T dépend de la température du fil chauffant RH. La durée minimum T2 de la durée T est fixée par le circuit monostable M2. La durée T reste égale à la durée T2 tant que la température du fil chauffant RH est inférieure à la température de consigne.

Une adaptation du niveau de tension du signal i(t) présent sur la sortie 16 peut être nécessaire. Dans ce cas, on prévoit un amplificateur A3 recevant le signal i(t) présent sur la sortie 16 et fournissant à la borne 5 de la résistance R5 un signal proportionnel au signal i(t).

L'interrupteur électronique SW est avantageusement un transistor à effet de champ dont une grille g reçoit le signal présent sur la sortie 9 de l'amplificateur A1 par l'intermédiaire d'une résistance R10. Une cathode d'une diode zéner Z2 est raccordée à la grille g et une anode de la diode zéner Z2 est raccordée au pâle négatif -. La résistance R10 et la diode zéner Z2 permettent d'adapter la tension du signal présent sur la sortie 9 de l'amplificateur A1 au besoin du transistor à effet de champ.

Avantageusement, si la tension de sortie du signal présent sur la sortie 9 n'atteint pas la tension du pôle négatif - ou celle du pôle positif +, on peut prévoir des résistances R7, R8 et R9 ainsi que des diodes D1 et D2 afin d'assurer un asservissement correct de la tension entre le drain et la source du transistor ou autrement dit de la tension aux bornes de l'interrupteur électronique SW. La résistance R9 est raccordée entre le point 2 et l'entrée non inverseuse 7 de l'amplificateur A1. La résistance R7 et la diode D1 sont raccordées en série entre le pôle positif + et l'entrée non inverseuse de l'amplificateur A1. La résistance R8 et la diode D2 sont raccordées en série entre l'entrée non inverseuse de l'amplificateur A1 et le pôle négatif -. Les diodes D1 et D2 sont orientées de façon à ce qu'un courant y circule du pôle positif + vers le pôle négatif -.

## Revendications

1. Dispositif de régulation de la température d'un fil chauffant (RH), le dispositif comportant un interrupteur électronique (SW) raccordé en série avec le fil chauffant (RH), des moyens de commande de l'interrupteur électronique (SW), le dispositif comportant en outre des moyens de maîtrise (4) d'un temps de commutation de l'interrupteur électronique (SW), **caractérisé en ce que** les moyens de maîtrise (4) asservissent la tension aux bornes de l'interrupteur (SW) en fonction d'une tension de consigne (c(t)) définissant le temps de commutation.

2. Dispositif selon la revendication 1, **caractérisé en ce qu'**il comporte des moyens de mesure (A2) de la température du fil chauffant, **en ce que** les moyens de commande ouvrent et ferment l'interrupteur électronique (SW) en fonction de la température du fil chauffant (RH).

3. Dispositif selon la revendication 2, **caractérisé en ce que** les moyens de mesure de la température du fil chauffant (RH) comportent des moyens de comparaison (A2) de la tension présente au point commun entre l'interrupteur électronique (SW) et le fil chauffant (RH) avec une tension de référence (R1, R2).

4. Dispositif selon l'une des revendications précédentes, **caractérisé en ce que** les moyens de maîtrise (4) définissent un temps de commutation supérieur à la durée normale de commutation de l'interrupteur électronique (SW) pris isolément.

5. Dispositif selon l'une des revendications précédentes, **caractérisé en ce que** les moyens de maîtrise comportent un amplificateur opérationnel (A1) dont une première entrée (7) est raccordée du point commun (2) du fil chauffant (RH), et de l'interrupteur électronique (SW), dont une deuxième entrée (8) reçoit la tension de consigne (c(t)) et dont la sortie (9) commandé l'ouverture et la fermeture de l'interrupteur électronique (SW).

## Patentansprüche

1. Vorrichtung zur Regelung der Temperatur eines Heizdrahts (RH), wobei die Vorrichtung einen elektronischen Unterbrecher (SW), der in Reihe an den Heizdraht (RH) angeschlossen ist, und Mittel zur Steuerung des elektronischen Unterbrechers (SW) aufweist, wobei die Vorrichtung außerdem Mittel (4) zur Beherrschung einer Umschaltzeit des elektronischen Unterbrechers (SW) aufweist, **dadurch gekennzeichnet, dass** die Beherrschungsmittel (4) die Spannung an den Klemmen des Unterbrechers (SW) in Abhängigkeit von einer Sollspannung (c(t)) regeln, die die Umschaltzeit definiert.

2. Vorrichtung nach Anspruch 1, **dadurch gekennzeichnet, dass** sie Mittel (A2) zur Messung der Temperatur des Heizdrahts aufweist und dass die Steuermittel den elektronischen Unterbrecher (SW) in Abhängigkeit von der Temperatur des Heizdrahts (RH) öffnen und schließen.

3. Vorrichtung nach Anspruch 2, **dadurch gekennzeichnet, dass** die Mittel zur Messung der Temperatur des Heizdrahts (RH) Mittel (A2) zum Vergleich der am gemeinsamen Punkt zwischen dem elektronischen Unterbrecher (SW) und dem Heizdraht (RH) vorhandenen Spannung mit einer Bezugsspannung (R1, R2) aufweisen.

4. Vorrichtung nach einem der vorhergehenden Ansprüche, **dadurch gekennzeichnet, dass** die Beherrschungsmittel (4) eine Umschaltzeit definieren, die länger ist als die normale Umschaltdauer des elektronischen Unterbrechers (SW) einzeln genommen.

5. Vorrichtung nach einem der vorhergehenden Ansprüche, **dadurch gekennzeichnet, dass** die Beherrschungsmittel einen Operationsverstärker (A1) aufweisen, dessen erster Eingang (7) mit dem gemeinsamen Punkt (2) des Heizdrahts (RH) und des elektronischen Unterbrechers (SW) verbunden ist, dessen zweiter Eingang (8) die Sollspannung (c(t)) empfängt und dessen Ausgang das Öffnen und Schließen des elektronischen Unterbrechers (SW) steuert.

## Claims

1. Device for regulating the temperature of a heating wire (RH), the device comprising an electronic switch (SW) connected in series with the heating wire (RH), means for controlling the electronic switch (SW), the device also comprising means (4) for controlling a switching time of the electronic switch (SW), **characterized in that** the control means (4) control the voltage across the terminals of the switch (SW) as a function of a setpoint voltage (c(t)) defining the switching time.

2. Device according to Claim 1, **characterized in that** it comprises means (A2) for measuring the temperature of the heating wire, **in that** the control means turn the electronic switch (SW) on and off as a function of the temperature of the heating wire (RH).

3. Device according to Claim 2, **characterized in that** the means for measuring the temperature of the heating wire (RH) comprise means (A2) for comparing the voltage present at the common point between the electronic switch (SW) and the heating wire (RH) with a reference voltage (R1, R2).

4. Device according to one of the preceding claims, **characterized in that** the control means (4) define a switching time that is longer than the normal switching time of the electronic switch (SW) taken in isolation.

5. Device according to one of the preceding claims, **characterized in that** the control means comprise an operational amplifier (A1), whereof a first input (7) is connected to the common point (2) of the heating wire (RH) and of the electronic switch (SW), whereof a second input (8) receives the setpoint voltage (c(t)) and whereof the output (9) controls the turning-on and the turning-off of the electronic switch (SW).
